Europäisches Patentamt

**European Patent Office**

Office européen des brevets

(19)

(11) Numéro de publication : **0 282 765 B1**

## (12) FASCICULE DE BREVET EUROPEEN

(45) Date de publication du fascicule du brevet :
**15.05.91 Bulletin 91/20**

(51) Int. Cl.⁵ : **B60C 11/12**

(21) Numéro de dépôt : **88102553.0**

(22) Date de dépôt : **22.02.88**

(54) **Bande de roulement pour pneumatique radial dont les éléments en relief sont pourvus d'incisions présentant des tracés en ligne brisée ou ondulée dans le sens de leurs profondeurs.**

(30) Priorité : **10.03.87 FR 8703371**

(43) Date de publication de la demande :
**21.09.88 Bulletin 88/38**

(45) Mention de la délivrance du brevet :
**15.05.91 Bulletin 91/20**

(84) Etats contractants désignés :
**AT BE CH DE ES GB IT LI LU NL SE**

(56) Documents cités :
**EP-A- 0 125 437**
**DE-A- 1 480 932**
**GB-A- 1 150 295**
**LU-A- 58 967**

(56) Documents cités :
**PATENT ABSTRACTS OF JAPAN, vol. 10, no. 200 (M-498)[2256], 12 juillet 1986, page 103 M 498; & JP-A-61 44 008 (SUMITOMO RUBBER IND. LTD) 03-03-1986**

(73) Titulaire : **MICHELIN & CIE (Compagnie Générale des Etablissements Michelin) Société dite:**
**4 rue du Terrail**
**F-63000 Clermont-Ferrand (FR)**

(72) Inventeur : **Lagnier, Alain**
**3, impasse des Tilleuls**
**F-63540 Romagnat (FR)**

(74) Mandataire : **Renaudie, Jacques et al**
**Michelin & Cie Service K. Brevets**
**F-63040 Clermont-Ferrand Cédex (FR)**

EP 0 282 765 B1

Jouve, 18, rue Saint-Denis, 75001 PARIS

## Description

L'invention concerne la bande de roulement d'un pneumatique routier, doté d'une armature de carcasse radiale et d'une armature de sommet et plus particulièrement destiné à des roulages sur sols enneigés, verglacés ou mouillés.

Une telle bande de roulement est généralement formée d'éléments en relief (nervures ou blocs), séparés les uns des autres dans le sens circonférentiel et/ou dans le sens transversal par des rainures et pourvus de nombreuses incisions ou fentes, dont la largeur non nulle est très inférieure à la largeur des rainures circonférentielles et transversales qui délimitent les éléments en relief. La largeur d'une incision est généralement, suivant la dimension de pneumatique étudié, comprise entre 0,1 mm et 2 mm.

Le brevet français 2 461 602 décrit les moyens pour conférer au pneumatique une meilleure efficacité en adhérence longitudinale sur les sols considérés, soit sous couple moteur, soit sous couple freineur. Ces moyens consistent à doter les éléments en relief des zones latérales de la bande de roulement d'incisions d'orientation sensiblement transversale sur la bande de roulement mais inclinées par rapport à la normale à la surface de la bande de roulement d'un angle au plus égal à 45° et dans le sens de rotation du pneumatique, et à doter les éléments en relief de la zone médiane d'incisions inclinées dans le sens opposé au sens de rotation. Ainsi les incisions des éléments en relief latéraux augmentent l'adhérence à l'accélération tandis que les incisions des éléments en relief de la zone médiane augmentent l'adhérence au freinage.

Une bande de roulement d'un pneumatique selon le préambule de la revendication 1 appartient à l'état de la technique.

Il est connu de l'homme de métier que, d'une manière générale, toute caractéristique ayant pour but d'améliorer l'adhérence d'un pneumatique, a de fortes chances de procurer une déchéance en usure. Tel est effectivement le cas de l'inclinaison des incisions, puisque le gain obtenu en adhérence sur les sols considérés est la conséquence de la formation d'une usure anormale des lames de gomme délimitées par les portions en regard de deux incisions successives et sensiblement parallèles entre elles. Cette usure permet, suivant l'orientation de l'incision par rapport au sens de rotation du pneumatique, de conserver des arêtes efficaces des lames de gomme.

Ce type d'usure, dite aussi irrégulière, n'est pas cependant sans inconvénients. Non seulement elle affecte les lames de gomme comprises entre deux incisions adjacentes, mais aussi l'élément en relief ou bloc lui-même, en particulier du fait de la variation considérable des distances entre les incisions les plus proches des rainures de délimitation du bloc et les parois de ces rainures.

En outre, les incisions étant inclinées par rapport à la normale à la surface de la bande de roulement avec des angles de signe opposé et non obligatoirement égaux en valeur absolue, suivant qu'elles sont situées au bord de la bande de roulement ou au centre de celle-ci, les usures irrégulières affectant les éléments en relief sont différentes en fonction de leur position axiale sur la bande de roulement. Il en est de même du taux d'usure de ces blocs, ce qui rend la surface de la bande de roulement dépourvue de toute uniformité, affectant ainsi la durée de vie du pneumatique sur usure, et l'efficacité des incisions à partir d'un certain taux d'usure.

Le but de l'invention est en conséquence d'améliorer l'aspect de la bande de roulement du pneumatique considéré après usure, tout en conservant un maximum d'efficacité des incisions vis-à-vis de l'adhérence sur tous les sols que le pneumatique est susceptible de rencontrer, soit sous couple freineur, soit sous couple moteur, et ceci en évitant l'apparition de fissures en fond d'incisions pouvant provoquer l'arrachement de lames de gomme entre deux incisions voisines.

La solution repose sur l'utilisation judicieuse de fentes ou incisions présentant d'une part sur la surface de la bande de roulement des tracés rectilignes et d'autre part sur un plan de coupe, à la fois perpendiculaire à l'orientation moyenne des incisions sur la surface de l'élément et à la surface de la bande de roulement, des tracés en ligne brisée ou ondulée sur toute leur profondeur.

Des incisions présentant en section droite des tracés non rectilignes sont connues. Ainsi le brevet FR 1 420 278, en vue d'éviter la détérioration importante, pouvant se produire dans les incisions d'une bande de roulement et causée par la pénétration de corps étrangers, enseigne de donner à la section droite d'une incision une forme coudée, ou incurvée dans sa partie médiane. Dans les parties haute et basse, la section droite est perpendiculaire à la surface de la bande de roulement ; ces incisions font avec la direction circonférentielle de faibles angles. Elles ne donnent donc pas lieu à des formes d'usure préférentielles et ne peuvent conférer à la bande de roulement l'adhérence nécessaire sous couple moteur ou freineur.

La bande de roulement, selon le préambule de la revendication 1, comporte au moins des éléments en relief, séparés par des rainures transversales et circonférentielles, et pourvus d'incisions de largeur non nulle, présentant sur la surface de la bande de roulement des tracés rectilignes. Ces tracés forment avec la direction axiale des angles au plus égaux en valeur absolue à 30°, sont sensiblement parallèles entre eux et aux rainures transversales de délimitation, et sont tels que la dimension axiale d'une lame de caoutchouc délimitée par deux incisions voisines soit au moins égale à 30 % de la largeur axiale de l'élément en relief au niveau de la lame de caoutchouc considérée. La bande de roulement ci-dessus est caractérisée conformément à l'invention en ce que chaque élément en relief comprend un nombre pair N d'incisions de profondeurs égales, et présentant en section droite, sur la totalité de la profondeur, des tracés en ligne brisée ou ondulée d'axes moyens perpendiculaires à la surface de la bande de roulement, et formés de segments faisant avec la normale à ladite surface des angles non nuls et au plus égaux à 40°, le tracé d'une incision étant identique au tracé symétrique, par rapport à son axe moyen, du tracé d'une incision circonférentiellement adjacente.

Sont considérées comme des rainures circonférentielles, soit des rainures continues rectilignes ou des rainures en zigzag par exemple, soit des portions de rainures d'orientation sensiblement circonférentielle, c'est-à-dire faisant avec la direction circonférentielle des angles inférieurs à 20°. De même sont considérées comme rainures transversales des rainures ou portions de rainures ayant une orientation faisant avec la direction axiale du pneumatique un angle au plus égal en valeur absolue à 30°.

Les caractéristiques et avantages de la présente invention seront mieux compris à l'aide de la description qui suit et qui se réfère au dessin illustrant à titre non limitatif des exemples d'exécution.

Sur ce dessin,
– la figure 1 est une vue en plan, non représentée à l'échelle, d'une bande de roulement comportant des incisions conformes à l'invention,
– la figure 2 est une vue détaillée, non représentée à l'échelle, sur un plan de coupe radial suivant la ligne AA de la figure 1,
– les figures 3A, 3B, 3C sont des vues, sur le même plan de coupe radial, de variantes préférentielles de l'invention.

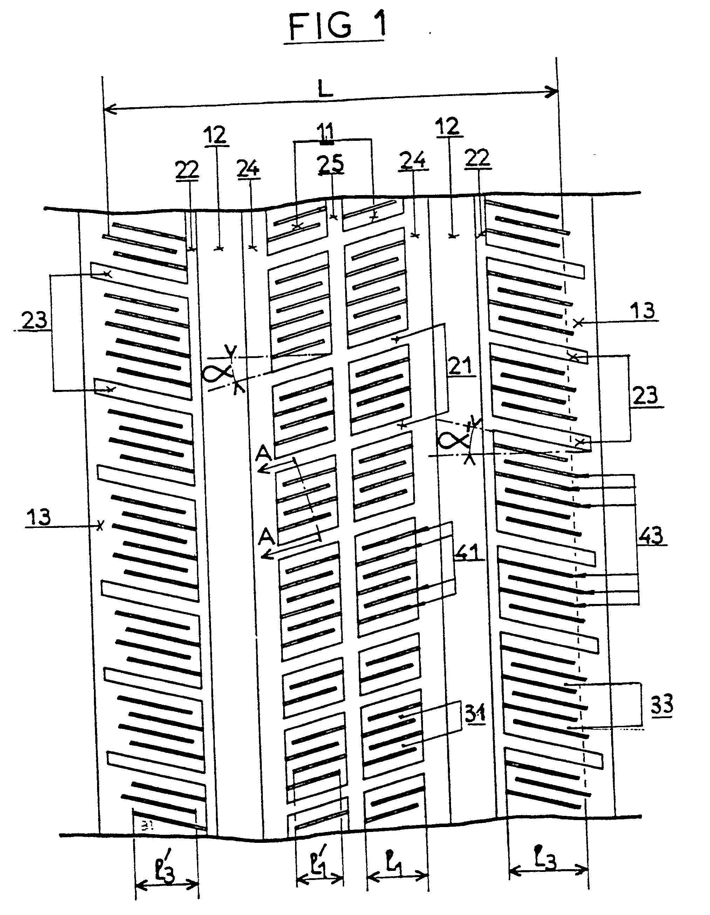

La portion de bande de roulement (1) d'un pneumatique 175 R 14 X, représentée sur la figure 1, comporte dans la région centrale des éléments en relief ou blocs (11), dans les régions latérales des blocs (13) et, entre ces deux rangées de blocs, des nervures circonférentielles (12). Les blocs (11) et (13) sont séparés dans le sens circonférentiel par des rainures, respectivement (21), (23), d'orientation sensiblement transversale, et sensiblement parallèles entre elles (sont considérées comme parallèles des rainures dont les orientations diffèrent d'un angle au plus égal à 10°). Les blocs (13) sont séparés des nervures (12) par des rainures circonférentielles (22) de faible largeur (2 mm à 4 mm) comparativement à la largeur des rainures circonférentielles (24) (5 mm à 7 mm) séparant les nervures (12) des blocs (11) des rangées médianes, ces blocs (11) étant eux-mêmes séparés les uns des autres par une rainure circonférentielle (25) de largeur intermédiaire (4 mm à 6 mm).

Les blocs (11), (13) sont, conformément à l'invention, pourvus d'incisions (41), (43) présentant sur la surface de la bande de roulement des tracés rectilignes avec des orientations parallèles entre elles (sont considérées comme étant parallèles entre elles des incisions dont les orientations sur la surface de la bande de roulement diffèrent d'un angle au plus égal à 10°), et sensiblement transversales, d'orientation identique à l'orientation des rainures (21), (23). Ces incisions sont en nombre pair sur chaque bloc (11), (13) de la bande de roulement. Dans le cas de la dimension étudiée, ce nombre est 2, 4 ou 6.

Les lames de gomme (31) délimitées par les incisions (41) des blocs (11) de la région médiane de la bande de roulement ont des dimensions axiales identiques $(1'_1)$ égale à 75% de la largeur axiale $(1_1)$, constante, des blocs (11). Il en est de même des lames de caoutchouc (33) des blocs (13), la dimension axiale $(1'_3)$ étant égale à 70% de la largeur axiale $(1_3)$ portant sur le sol des blocs (13).

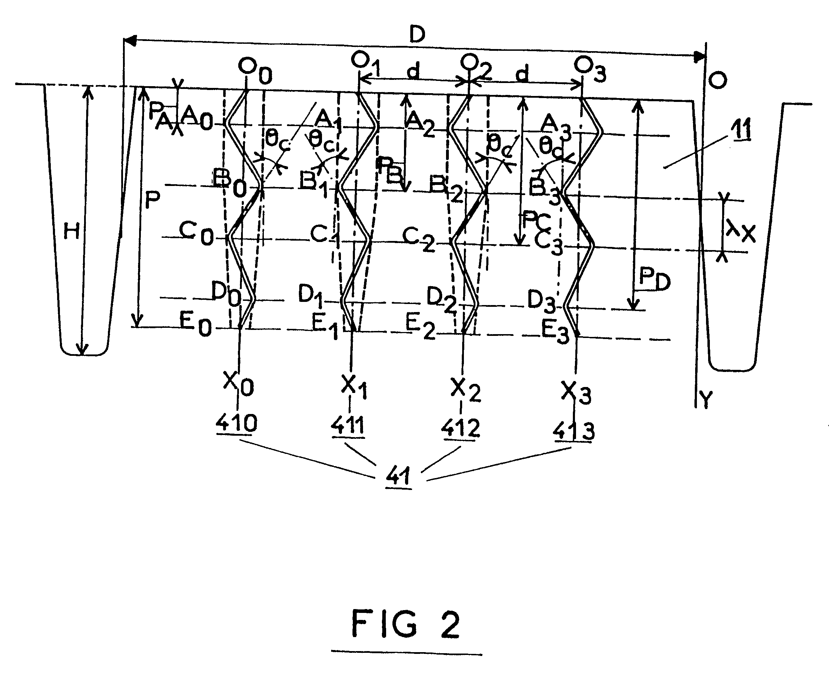

Sur la figure 2 du dessin apparaissent les tracés respectifs en section droite des quatre incisions (41) d'un bloc (11) de la partie médianne de la bande de roulement. Ces incisions (410, 411, 412, 413) ont la même profondeur (P), pouvant être comprise entre 0,4 H et 1,5 H, H étant la profondeur des rainures. Chaque incision a un tracé en zigzag dont l'axe moyen $(O_n X_n)$, n prenant les valeurs de 0 à 3, est perpendiculaire à la surface de la bande de roulement. Ce tracé, par exemple de l'incision 411, (n = 1) est formé de cinq segments radialement successifs $(O_1 A_1, A_1 B_1, B_1 C_1, C_1 D_1, D_1 E_1)$ définissant quatre crêtes $(A_1, B_1, C_1, D_1)$, les points $O_1$ et $E_1$ se trouvant sur l'axe moyen $(O_1 X_1)$. Il est identique au tracé symétrique par rapport à l'axe moyen $(O_0 X_0)$ du tracé $(O_0 A_0 B_0 C_0 D_0 E_0)$ (n – 1 = 0) de l'incision circonférentiellement adjacente (410).

Autrement dit, les crêtes correspondantes, soit $A_n$, soit $B_n$, $C_n$ ou $D_n$ (n variant de 0 à 3) sont situées à la même distance radiale respectivement $p_A$, $p_B$, $p_C$ et $p_D$ de la surface de la bande de roulement.

Quant aux segments correspondants, par exemple $B_n C_n$ $(B_0 C_0, B_1 c_1, B_2 C_2, B_3 C_3)$, respectivement des incisions (410, 411, 412, 413), ils font avec la perpendiculaire à la surface de la bande de roulement des angles $\theta_c$ de 30° égaux en valeur absolue, mais alternativement de signes opposés dans le sens circonférentiel. Si on considère comme sens positif le sens trigonométrique, lesdits segments font respectivement des angles $(-\theta_c + \theta_c - \theta_c + \theta_c)$.

Grâce à la variation, en fonction de la profondeur, des épaisseurs des lames de gommes qu'elles délimitent, variation de sens contraire d'une lame à la suivante, de telles incisions, en nombre pair sur un élément en relief donné, permettent une plus grande uniformité de l'usure de la bande de roulement, et corrélativement une plus grande longévité de celle-ci, tout en ayant constamment un nombre égal de lames de gomme efficaces en freinage et en accélération. Outre que de telles incisions permettent aussi, comme connu, d'éviter la pénétration et surtout le cheminement vers leurs fonds d'objets étrangers au pneumatique, elles procurent de nombreux autres avantages. Il est ainsi possible d'obtenir un pneumatique efficace en adhérence sous couple moteur et sous couple freineur quel que soit son sens de montage sur sa jante.

Il suffit, comme montré sur la figure 2, que les axes moyens $O_0X_0$, $O_1X_1$, $O_2X_2$, $O_3X_3$ soient équidistants les uns des autres, la distance circonférentielle (d) séparant deux axes moyens étant aussi la distance circonférentielle séparant l'axe moyen ($O_3X_3$, $O_0X_0$) d'une incision adjacente à la rainure (21) de délimitation de l'élément en relief et l'axe moyen (OY) de la paroi de la rainure.

Si l'on appelle ($\lambda$x) la distance radiale séparant deux crêtes successives d'une même incision ou pseudo longueur d'onde, et (a) la distance circonférentielle, ou amplitude, entre deux crêtes radialement distantes de ($\lambda$x), la distance ($\lambda$x) est au moins égale à 0,125 P, et l'amplitude (a) est, de manière préférentielle, comprise entre 0,5 et 1,5 fois la distance minimale ($\lambda$x).

Il est aussi avantageux que le nombre de crêtes d'une même incision, soit au moins égal à 3, et que la distance (d), comprise entre les axes moyens des deux incisions voisines ou entre les axes moyens des parois des rainures de délimitation et les axes moyens des incisions les plus proches, ne soit pas inférieur à 3,5 mm, quelle que soit la dimension circonférentielle (D) de l'élément en relief considéré.

Un autre avantage inattendu réside dans la possibilité d'influencer directement les rigidités respectives des lames de gomme sur un même élément en relief, mais aussi les rigidités respectives des éléments en relief sur la bande de roulement. Si lesdites rigidités ont une influence certaine sur les formes d'usure et sur les vitesses d'usure, elles exercent aussi, en combinaison avec les rigidités propres des armatures sousjacentes qui renforcent la bande de roulement, une influence non négligeable sur les qualités de comportement routier d'un pneumatique (tenue en virages, stabilité en ligne droite, réponse aux sollicitations volant, confort, bruit...) sur un véhicule donné, ayant ses propres caractéristiques.

Les études de la demanderesse ont montré qu'il est avantageux, dans le cas de pneumatique dont l'épaisseur de la bande de roulement est inférieure à 12 mm, et dont l'armature de sommet est formée soit entièrement de câbles métalliques, soit d'une association câbles métalliques et câbles textiles, qu'un élément en relief ou bloc donné soit pourvu d'un nombre pair d'incisions, chaque incision ayant une amplitude (a) et une pseudo longueur d'onde ($\lambda$x), qui sont constantes en fonction de la profondeur (P) des incisions.

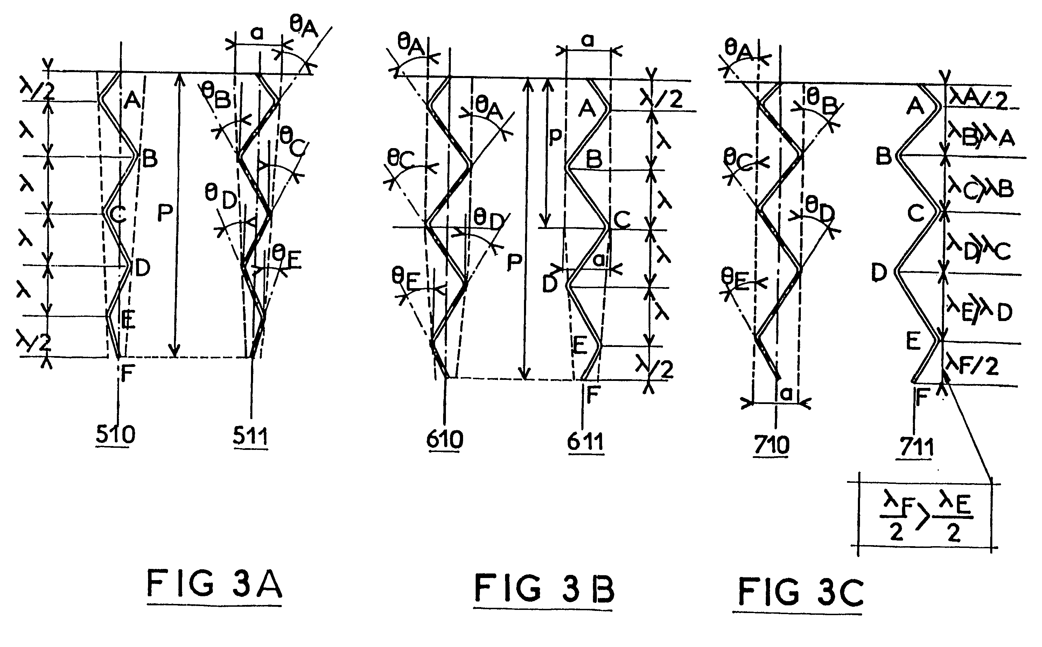

Par contre, dans le cas de pneumatiques possédant une bande de roulement dont l'épaisseur est égale ou supérieure à 13 mm, il est avantageux, en vue d'obtenir le meilleur compromis entre l'adhérence, la longévité sur usure et le comportement routier pendant toute la durée de vie du pneumatique, que l'angle ($\theta$) que fait un segment du tracé de l'incision avec la normale à la surface de la bande de roulement ne soit pas constant en fonction de la profondeur mais soit décroissant en fonction de celle-ci, comme montré sur les figures 3A, 3B, 3C.

La figure 3A montre deux incisions (510, 511), conformes à l'invention, présentant une décroissance des angles ($\theta$) en fonction de la profondeur (P). Cette décroissance est obtenue par la décroissance linéaire en fonction de (P) de l'amplitude (a) à pseudo longueur d'onde ($\lambda$x) constante. Les angles ($\theta$) varient de $\theta_A$, égal à 35°, pour les segments les plus proches de la surface de la bande de roulement à $\theta_E$, égal à 10°, pour les segments les plus proches de l'armature de sommet (3).

La figure 3B montre une variante suivant laquelle l'amplitude (a) reste constante sur une profondeur donnée (p) au moins égale à 0,5 P, et décroît ensuite linéairement en fonction de la profondeur, les angles ($\theta$) décroissant alors de 35° à 10° en fond d'incisions.

Lorsque le bloc est très lamellisé, c'est-à-dire un bloc pourvu d'incisions le plus rapprochées possible les unes des autres, la distance (d) les séparant étant alors légèrement supérieure à 3,5 mm, il est préférable d'obtenir la décroissance des angles ($\theta$) en fonction de la profondeur, en conservant l'amplitude (a) constante, comme montré sur la figure (3C). Ce sont alors les pseudo longueurs d'onde ($\lambda$x) qui croissent en fonction de la profondeur, soit de manière linéaire (figure 3C), soit en restant constantes sur une profondeur (p) donnée et croissantes ensuite jusqu'à la profondeur (P) (non montré).

Les quatre variantes ci-dessus permettent ainsi de régler la rigidité des lames délimitées par les incisions, en fonction de la profondeur, en les rendant plus mobiles en fonction du taux d'usure de la bande de roulement, ce qui compense l'effet rigidifiant de l'armature de sommet sous-jacente, cet effet étant plus important à la base des lames.

L'invention permet, en dernier lieu, de traiter différemment les éléments en relief, suivant leurs dimensions axiales et circonférentielles, suivant leurs positions sur la bande de roulement. A titre d'exemple non limitatif, on peut avantageusement munir les blocs (11) du centre de la bande de roulement d'incisions dont les amplitudes (a) et les pseudo longueurs d'onde ($\lambda$x) sont constantes en fonction de la profondeur (P), et égales pour tous les blocs. Par contre les blocs (13) des régions latérales de la bande de roulement sont pourvus d'incisions ayant une profondeur (P'), différente de (P), et dont les amplitudes (a'), différentes de (a) seront décroissantes linéairement avec la profondeur (P'), les pseudo longueurs d'onde ($\lambda$x), différentes de ($\lambda$x), étant constantes.

Bien que l'invention concerne fondamentalement les blocs d'une bande de roulement, on ne sort pas du cadre de l'invention comme revendiquée en utilisant de telles incisions sur des nervures, associées ou non à des blocs. Si des nervures sont associées à des blocs, ces nervures peuvent aussi être pourvues d'incisions différentes de celles des blocs, et en particulier non conformes à l'invention du point de vue de leurs tracés sur la bande de roulement, de leur inclinaison par rapport à la normale à la surface de la bande de roulement, et de leur orientation sur la surface de la bande de roulement.

**Revendications**

1. Bande de roulement (1) pour pneumatique à armature de carcasse radiale, comportant au moins des éléments en relief ou blocs (11, 13) séparés par des rainures circonférentielles (22, 24) et des rainures transversales (21, 23), pourvus d'incisions (41, 43) de largeur (e) non nulle, présentant sur la surface de la bande de roulement des tracés rectilignes formant avec la direction axiale des angles ($\alpha$, $\alpha'$) au plus égaux en valeur absolue à 30°, parallèles entre eux et aux tracés des rainures transversales (21, 23), deux incisions voisines délimitant une lame de caoutchouc dont la dimension axiale est au moins égale à 30% de la largeur axiale correspondante de l'élément en relief, caractérisée en ce que chaque élément en relief (11, 13) comprend un nombre pair N d'incisions de profondeurs (P) égales, présentant en section droite sur la totalité de la profondeur (P), des tracés en ligne brisée ou ondulée d'axes moyens ($O_nX_n$) perpendiculaires à la surface de la bande de roulement, et formés de segments ($O_nA_n$, $A_nB_n$, $B_nC_n$,...) faisant avec la normale à ladite surface des angles ($\theta_A$, $\theta_B$, $\theta_C$,...) non nuls et au plus égaux à 40°, le tracé d'une incision étant identique au tracé symétrique, par rapport à son axe moyen ($O_{n-1}X_{n-1}$), du tracé d'une incision circonférentiellement adjacente.

2. Bande de roulement suivant la revendication 1, caractérisée en ce que la distance circonférentielle (d), séparant les axes moyens ($O_nX_n$) de deux incisions adjacentes ou les axes moyens (OY) des parois des rainures de délimitation des axes moyens ($O_0X_0$, $O_nX_n$) des incisions les plus proches, est une constante au moins égale à 3,5 mm.

3. Bande de roulement suivant les revendications 1 ou 2, caractérisée en ce que le nombre de crêtes ($A_n$, $B_n$, $C_n$,...) n'est pas inférieur à 3.

4. Bande de roulement, suivant l'une des revendications 1 à 3, caractérisée en ce que la distance radiale ($\lambda x$) entre deux crêtes successives d'une même incision est au moins égale à 0,125 fois ladite profondeur (P).

5. Bande de roulement, suivant la revendication 4, caractérisée en ce que la distance circonférentielle (a) séparant deux crêtes successives d'une même incision est comprise entre 0,5 fois et 1,5 fois la distance radiale ($\lambda x$) minimale.

6. Bande de roulement, suivant la revendication 5, caractérisée en ce que la distance circonférentielle (a) et la distance radiale ($\lambda x$) sont constantes en fonction de ladite profondeur (P).

7. Bande de roulement suivant la revendication 5, caractérisée en ce que ladite distance circonférentielle (a) décroît linéairement en fonction de ladite profondeur (P), la distance radiale ($\lambda x$) étant constante (Fig. 3A).

8. Bande de roulement, suivant la revendication 5, caractérisée en ce que la distance circonférentielle (a) est constante sur une profondeur partielle (p), puis décroît linéairement de la profondeur partielle (p) à ladite profondeur totale (P), la distance radiale ($\lambda x$) étant constante (Fig. 3B).

9. Bande de roulement, suivant la revendication 5, caractérisée en ce que la distance circonférentielle (a) est constante en fonction de ladite profondeur (P), la distance radiale ($\lambda x$) croissant en fonction de ladite profondeur (P) (Fig. 3C).

**Ansprüche**

1. Lauffläche (1) für Gürtelreifen, die zumindest erhabene Elemente oder Blöcke (11, 13), getrennt von Umfangsnuten (22, 24) und Quernuten (21, 23) aufweist, die mit Einschnitten (41, 43) der Breite (e), die nicht Null ist, versehen sind, die auf der Oberfläche der Lauffläche geradlinige Spuren aufweisen und mit der axialen Richtung Winkel ($\alpha$, $\alpha'$) aufweisen, deren Absolutwert höchstens gleich 30° ist, die untereinander und zu den Spuren der Quernuten (21, 23) parallel sind, wobei zwei benachbarte Einschnitte eine Kautschuklamelle definieren, deren axiale Abmessung zumindest gleich ist 30% der axialen Breite des entsprechenden erhabenen Elementes, dadurch gekennzeichnet, daß jedes erhabene Element (11, 13) eine gerade Anzahl (N) von Einschnitten aufweist, die die gleiche Tiefe (P) aufweisen und wobei die Spuren im Querschnitt über die gesamte Tiefe (P), die Form einer gebrochenen oder gewellten Linie haben, deren Mittelachsen ($O_nX_n$) rechtwinkelig auf die Oberfläche der Lauffläche stehen und wobei die Segmente ($O_nA_n$, $A_nB_n$, $B_nC_n$,...) mit der Normalen auf diese Oberfläche Winkel ($\theta_A$, $\theta_B$, $\theta_C$,...) bilden, die nicht Null sind und höchstens gleich sind 40° und wobei die Spur eines Einschnittes identisch ist mit der bezüglich ihrer Mittelachse ($O_{n-1}X_{n-1}$) gespiegelten Spur des in Umfangsrichtung benachbarten Einschnittes.

2. Lauffläche nach Anspruch 1, dadurch gekennzeichnet, daß der Abstand (d) in Umfangsrichtung der die Mittelachsen ($O_nX_n$) zweier benachbarter Einschnitte oder die Mittelachsen (OY) der Grenznuten und der Mittelachsen ($O_0X_0$, $O_nX_n$) der zunächst lie-

genden Einschnitte trennt, konstant und zumindest gleich 3,5 mm ist.

3. Lauffläche nach Anspruch 1 oder 2, dadurch gekennzeichnet, daß die Anzahl der Kämme ($A_n$, $B_n$, $C_n$,...) nicht unter 3 beträgt.

4. Lauffläche nach einem der Ansprüche 1 bis 3, dadurch gekennzeichnet, daß der Radialabstand ($h_x$) zwischen zwei aufeinanderfolgenden Kämmen eines Einschnittes zumindest gleich ist dem 0,125-fachen der genannten Tiefe (P).

5. Lauffläche nach Anspruch 4, dadurch gekennzeichnet, daß der Umfangsabstand (a), der zwei aufeinanderfolgende Kämme des gleichen Einschnittes trennt, zwischen dem 0,5-fachen und dem 1,5-fachen der minimalen radialen Distanz ($\lambda_x$) liegt.

6. Lauffläche nach Anspruch 5, dadurch gekennzeichnet, daß der Umfangsabstand (a) und der radiale Abstand ($\lambda_x$) über die Tiefe (P) konstant sind.

7. Lauffläche nach Anspruch 5, dadurch gekennzeichnet, daß der Umfangsabstand (a) linear mit der Tiefe (P) abnimmt und der radiale Abstand ($\lambda_x$) konstant bleibt (Fig. 3A).

8. Lauffläche nach Anspruch 5, dadurch gekennzeichnet, daß der Umfangsabstand (a) über einen Teil der Tiefe (p) konstant bleibt und dann von der Teiltiefe (p) bis zur Endtiefe (P) linear abnimmt, wobei der radiale Abstand ($\lambda_x$) konstant bleibt (Fig. 3B).

9. Lauffläche nach Anspruch 5, dadurch gekennzeichnet, daß der Umfangsabstand (a) über die Tiefe (P) konstant bleibt und der radiale Abstand ($\lambda_x$) mit der Tiefe (P) zunimmt (Fig. 3C).

## Claims

1. A tread (1) for tyres with radial carcass reinforcement, comprising at least elements in relief or blocks (11, 13) separated by circumferential grooves (22, 24) and transverse grooves (21, 23) and provided with incisions (41, 43) of a width (e) other than zero, the incisions having on the surface of the tread rectilinear traces which form with the axial direction angles ($\alpha$, $\alpha'$) at most equal in absolute value to 30° and which are parallel to each other and to the traces of the transverse grooves (21, 23), two adjacent incisions defining a strip of rubber, the axial dimension of which is at least equal to 30% of the corresponding axial width of the element in relief, characterised in that each element in relief (11, 13) comprises an even number N of incisions of equal depth (P) and having in cross-section over the entire depth (P) broken line or undulated line traces with mean axes ($O_nX_n$) perpendicular to the surface of the tread and formed of segments ($O_nA_n$, $A_nB_n$, $B_nC_n$,...) forming angles $\theta_A$, $\theta_B$, $\theta_C$,...) which are other than zero and at most equal to 40° with the normal to said surface, the trace of an incision being identical to the symmetrical trace, with respect to its mean axis ($O_{n-1}$, $X_{n-1}$), of the trace of a circumferentially adjacent incision.

2. A tread according to Claim 1, characterised in that the circumferential distance (d) separating the mean axes ($O_nX_n$) of two adjacent incisions or the mean axes (OY) of the walls of the delimiting grooves from the mean axes ($O_oX_o$, $O_nX_n$) of the closest incisions is a constant at least equal to 3.5 mm.

3. A tread according to Claim 1 or 2, characterised in that the number of crests ($A_n$, $B_n$, $C_n$,...) is not less than 3.

4. A tread according to one of Claims 1 to 3, characterised in that the radial distance ($\lambda x$) between two successive crests of one and the same incision is at least equal to 0.125 times said depth (P).

5. A tread according to Claim 4, characterised in that the circumferential distance (a) between two successive crests of one and the same incision is between 0.5 times and 1.5 times the minimum radial distance ($\lambda x$).

6. A tread according to Claim 5, characterised in that the circumferential distance (a) and the radial distance ($\lambda x$) are constant as a function of said depth (P).

7. A tread according to Claim 5, characterised in that said circumferential distance (a) decreases linearly as a function of said depth (P), the radial distance ($\lambda x$) being constant (Fig. 3A).

8. A tread according to Claim 5, characterised in that the circumferential distance (a) is constant over a partial depth (p) and then decreases linearly from the partial depth (p) to said total depth (P), the radial distance ($\lambda x$) being constant (Fig. 3B).

9. A tread according to Claim 5, characterised in that the circumferential distance (a) is constant as a function of said depth (P), the radial distance ($\lambda x$) increasing as a function of said depth (P) (Fig. 3C).

# FIG 1

FIG 2

EP 0 282 765 B1

FIG 3A   FIG 3B   FIG 3C

EP 0 282 765 B1